# EUROPEAN PATENT SPECIFICATION

(11) **EP 1 661 657 B1**
(45) Date of publication and mention of the grant of the patent: **16.07.2008**
(21) Application number: 05025885.4
(22) Date of filing: 28.11.2005
(51) Int. Cl.: B23K 26/10, B23K 26/08, B23K 37/02, B25J 9/16, B23Q 1/01, B25J 9/10

(54) **Laser processing robot system with a scanning head and a rapid movable support mechanism ; Method for controlling the same**
Laserbearbeitung Robotersystem mit einem Rasterkopf und einer schnell bewegbaren Trägervorrichtung ; Verfahren zum Kontrollieren eines solchen Systems
Système robotisé d'usinage laser avec une tête de balayage laser et un mécanisme de support à déplacement rapide ; Méthode de contrôle d'un tel système

(30) Priority: 30.11.2004 JP 2004345896
(43) Date of publication of application: 31.05.2006
(73) Proprietor: FANUC LTD, Minamitsuru-gun, Yamanashi 401-0597 (JP)
(72) Inventor: Otsuka, Kazuhisa FANUC Manshonharimomi, Minamitsuru-gun Yamanashi 401-0511 (JP); Furuya, Yoshitake FANUC Manshonharimomi, Minamitsuru-gun Yamanashi 401-0511 (JP)
(74) Representative: Thum, Bernhard

(56) References cited:
- EP-A- 0 870 571
- DE-A1- 3 627 560
- US-A- 5 298 717
- US-A1- 2004 094 728
- US-A1- 2004 111 185

## Description

The present invention relates to a laser processing robot system according to the preamble of claim 1. The present invention also relates to a method of controlling a laser processing robot system according to the preamble of claim 6 (see, for both claims, for example, US 2004/111185 A1).

### Description of the Related Art

A laser processing robot system, in which an industrial robot performs laser processing, has received attention, in recent years, as, e.g., a processing system that may replace a spot welding robot in an automobile manufacturing line. In the laser processing robot system, a laser processing tool having a head for scanning a laser beam (referred to as "a laser scan head" in this patent application) with a movable mirror incorporated therein is attached to the end of a manipulator as an end effector, and the operations of the manipulator and the movable mirror are controlled, so that it is possible to perform laser processing while a laser beam accurately scans a surface to be processed.

For example, Japanese Unexamined Patent Publication (Kokai) No. 2002-301585 (JP-A-2002-301585) discloses a laser welding system including a laser scan head with a movable mirror incorporated therein. In this laser welding system, the laser scan head is mounted to a robot for welding automobile bodies, so that the robot can operate to perform a welding process while positioning the laser scan head.

In document EP 0 870 571 A2 there is disclosed a method and apparatus for welding a work piece, where a laser scan head is moved while it is not emitting a laser beam. The laser scan head can be moved vertically and around a rotational axis for positioning it inside the work piece.

US 2004/0111185 A1 discloses a method for machining work pieces by means of a multi-axial manipulator. In this document, it is suggested to evaluate the degrees of freedom of a tool connected to the manipulator together with the degrees of freedom of the axes of the manipulator in real time to move a tool tip in accordance with a predetermined continuous machining path and for determining a movement of the manipulator.

Document DE 36 27 560 A1 describes a program-controlled and sensor-guided manufacturing system, especially an industrial robot. The robot described herein is comprised of two independently controllable system units, each controlled by a separate control circuit.

As the laser processing robot system is generally more expensive than processing systems including the spot welding robot or other processing equipment, it is desired to reduce a cycle time and improve a processing efficiency from the viewpoint of a cost reduction. In order to reduce the cycle time, it is effective to reduce a time required for a so-called rapid-traverse operation which is performed to move the laser scan head between a waiting position and a working position or between different working positions. Conventionally, such a rapid-traverse operation is performed by the operation of the manipulator. However, as the operation of the manipulator is generally accompanied with a motion of an arm having a large inertia, it is difficult to effectively reduce a rapid-traverse time.

The rapid-traverse time is a non-processing time in which the laser scan head does not emit the laser beam. Therefore, if it is difficult to reduce the rapid-traverse time, the ratio of an actual processing time, in which the laser scan head emits the laser beam, to the cycle time is reduced and, thus, a processing efficiency is deteriorated.

### SUMMARY OF THE INVENTION

It is an object of the present invention to provide a laser processing robot system for performing laser processing by a laser processing tool attached to the end of a manipulator, which can easily and effectively reduce a time required for the rapid-traverse operation of a laser scan head, and thus can reduce a cycle time and improve a processing efficiency.

It is another object of the present invention to provide a method of controlling a laser processing robot system for performing laser processing by a laser processing tool attached to the end of a manipulator, which can easily and effectively reduce a time required for the rapid-traverse operation of a laser scan head, and thus can reduce a cycle time and improve a processing efficiency.

In order to accomplish the above objects, the present invention provides a laser processing robot system according to claim 1.

In the above-described laser processing robot system, the rapid-traverse operation controlling section may control an operation of at least one of the manipulator and the movable mirror, in addition to an operation control of the movable support mechanism, during the non-processing period.

Also; the control unit may further comprise a processing operation controlling section for controlling an operation of at least one of the manipulator, the movable mirror and the movable support mechanism to make the laser processing tool perform a processing operation during a processing period when the laser scan head emits a laser beam.

Also, the movable support mechanism may include a vertical shifting section and a horizontal shifting section, for shifting the laser scan head in a vertical direction and a horizontal direction, respectively, relative to a surface to be processed.

The laser processing robot system may be configured to further comprise an off-line teaching section for teaching the control unit an operation of at least one of the manipulator, the movable mirror and the movable support mechanism through an off-line simulation; wherein the off-line teaching section prepares a series of laser processing programs for a workpiece on a condition that an operating amount of the manipulator is minimized.

The present invention also provides a method for controlling a laser processing robot system according to claim 6.

### BRIEF DESCRIPTION OF THE DRAWINGS

The above and other objects, features and advantages of the present invention will be more apparent from the following description of the preferred embodiments in conjunction with the accompanying drawings, in which:
Fig. 1 is a block diagram showing a basic configuration of a laser processing robot system according to the present invention;
Fig. 2 is an illustration typically showing a configuration of a laser processing robot system according to an embodiment of the present invention;
Fig. 3 is an illustration typically showing a configuration of a laser processing tool in the laser processing robot system of Fig. 2;
Fig. 4 is an illustration schematically showing a laser scan head of the laser processing tool of Fig. 3;
Fig. 5 is an illustration showing an example of an off-line simulation in the laser processing robot system of Fig. 2; and
Fig. 6 is a flow chart showing a playback process of a laser processing program in the laser processing robot system of Fig. 2.

### DETAILED DESCRIPTION

The embodiments of the present invention are described below, in detail, with reference to the accompanying drawings. Throughout the drawings, the same or similar components are denoted by common reference numerals.

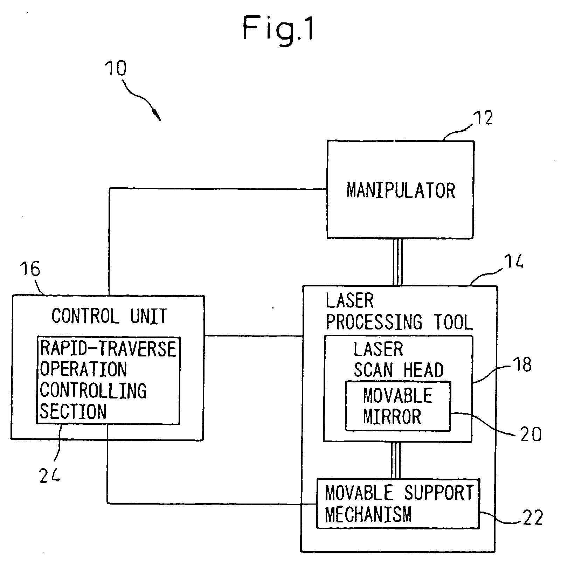

Referring to the drawings, Fig. 1 shows a basic configuration of a laser processing robot system 10 according to the present invention. The laser processing robot system 10 includes a manipulator 12 constituting a robot mechanical section, a laser processing tool 14 attached to the manipulator 12, and a control unit 16 for controlling the operations of the manipulator 12 and the laser processing tool 14, wherein the laser processing tool 14 provided with a movable laser scan head 18 is attached to the end of the manipulator 12, so that it is possible to reduce a time required for a rapid-traverse operation of the laser scan head 18. More specifically, the laser processing tool 14 includes the laser scan head 18 with a movable mirror 20 incorporated therein, and a movable support mechanism 22 for movably supporting the laser scan head 18. Further, the control unit 16 includes a rapid-traverse operation controlling section 24 for controlling the operation of the movable support mechanism 22 so as to make the laser scan head 18 perform a rapid-traverse operation within the laser processing tool 14, during a non-processing period when the laser scan head 18 does not emit a laser beam.

In the laser processing robot system 10 configured as described above, when the laser scan head 18 is intended to be moved between a waiting position and a working position or between different working positions in a laser processing program, it is possible to operate the movable support mechanism 22 under the control of the rapid-traverse operation controlling section 24, and thus to make the laser scan head 18 perform the rapid-traverse operation without operating the manipulator 12. Therefore, it is possible to perform the rapid-traverse operation by only the shifting motion of the laser scan head 18 without it being accompanied with a motion of the arm of the manipulator 12 having a large inertia, so that it is possible to effectively reduce a rapid-traverse time and thus to reduce a cycle time and improve a processing efficiency. Further, it is possible to decrease a manufacturing cost of a product manufactured by using a laser processing.

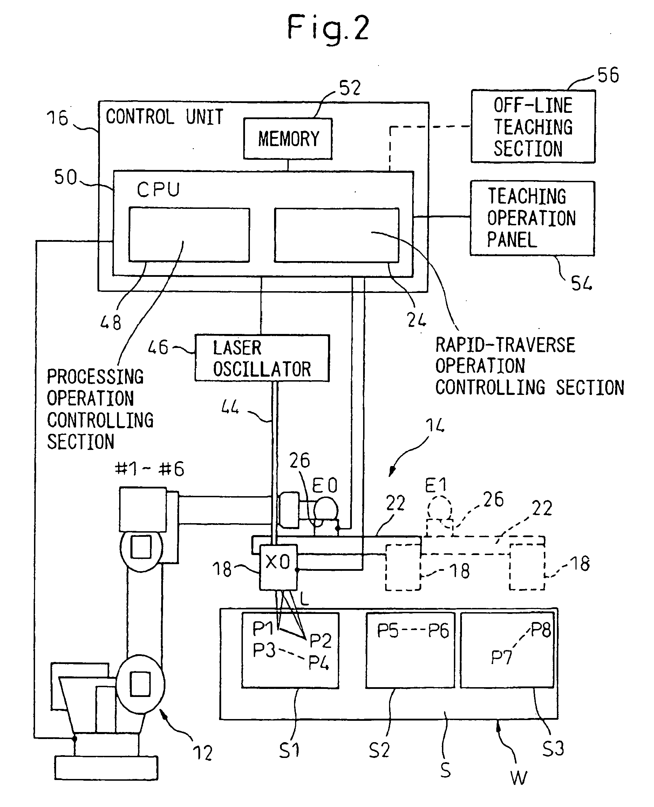

An embodiment of the laser processing robot system 10 having the above-described basic configuration will be described in more detail with reference to Figs. 2 to 4. In the illustrated embodiment, the manipulator 12 is, by way of example, an articulated manipulator, with six axes, in which the laser processing tool 14 is attached to a flange surface (i.e., a mechanical interface) 26 at the distal end of the arm (Fig. 2). The manipulator 12 operates variously under the control of the control unit 16 to locate the laser processing tool 14 at desired positions. In this patent application, by way of example, the control axes of the 6-axes manipulator 12 are designated #1 to #6.

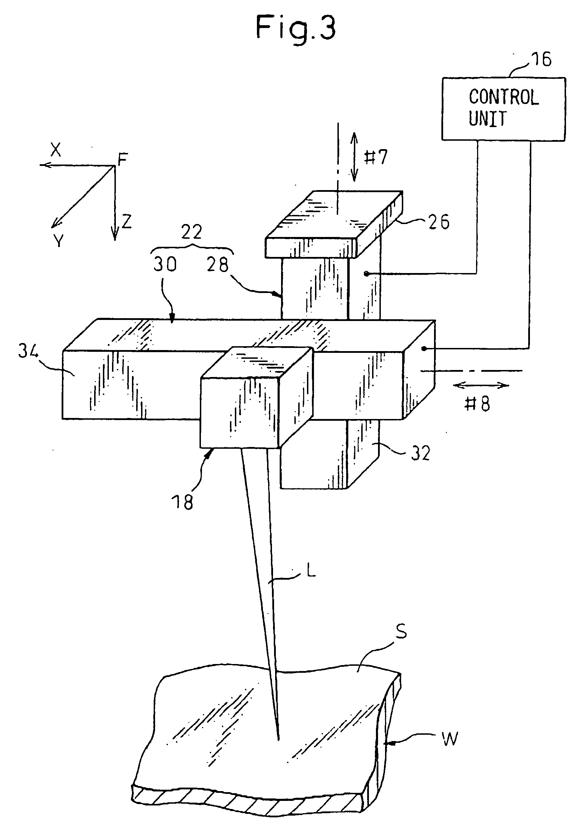

The laser processing tool 14 includes the movable support mechanism 22 for moving the laser scan head 18 within the laser processing tool 14. As shown in Fig. 3, the movable support mechanism 22 includes a vertical shifting section 28 and a horizontal shifting section 30, for shifting the laser scan head 18 in a vertical (or height) direction and a horizontal direction, respectively, relative to a surface S (or a surface to be processed) of a workpiece W (or a material to be processed). The vertical shifting section 28 is provided for adjusting a position in the height direction (or a distance from the surface S to be processed) of the laser scan head 18, and may include, e.g., a linear motor mechanism having a slider (not shown). On the other hand, the horizontal shifting section 30 is provided for shifting the laser scan head 18 along a processing line (e.g., a welding line) on the surface S to be processed (hereinafter referred to as the processed surface S) or for making the laser scan head 18 perform a rapid-traverse operation, and may include, e.g., a linear motor mechanism having a slider (not shown).

The vertical shifting section 28 includes a vertical base 32 fixedly supported on the flange surface 26 of the manipulator 12. The horizontal shifting section 30 includes a horizontal base 34 movably supported on the vertical base 32. The laser scan head 18 is movably supported on the horizontal base 34 of the horizontal shifting section 30. Under the control of the control unit 16, the vertical shifting section 28 linearly shifts the horizontal base 34 on the vertical base 32 along, e.g., a Z-axis in a mechanical interface coordinate system (defining an origin F) set on the basis of the flange surface 26. On the other hand, under the control of the control unit 16, the horizontal shifting section 30 linearly shifts the laser scan head 18 on the horizontal base 34 along an X-axis in the mechanical interface coordinate system (defining the origin F). In this patent application, the control axis for the vertical shifting section 28 is designated as #7, and the control axis for the horizontal shifting section 30 is designated as #8. In this connection, it is possible to adopt, as the vertical and horizontal shifting sections 28 and 30 of the movable support mechanism 22, a linear operation mechanism including a combination of a ball screw and a servo motor, in place of the linear motor mechanism. In either case, three-dimensional operations of the laser scan head 18 can be controlled reliably by a simple configuration.

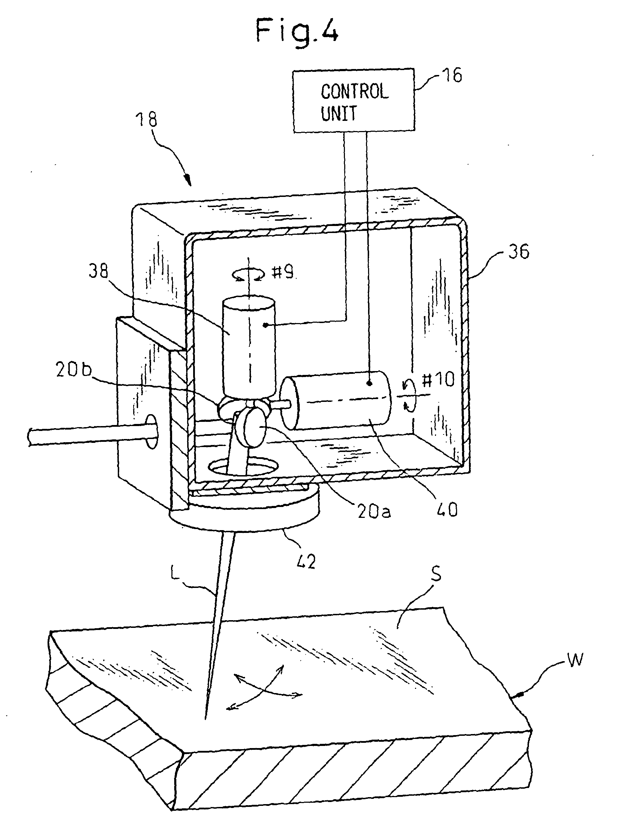

As shown in Fig. 4, the laser scan head 18 includes a pair of movable mirrors 20a, 20b accommodated in a casing 36, a pair of servo motors 38, 40 for individually driving the movable mirrors 20a, 20b for rotation, and a lens 42 mounted at an outlet opening for a laser beam L. Under the control of the control unit 16, the movable mirrors 20a, 20b are driven by the respective servo motors 38, 40 to rotate by appropriate angles about axes extending orthogonally to each other. As a result, the laser scan head 18 emits the laser beam introduced therein from the outside thereof in a desired direction through the lens 42, while continuously varying the reflection angles of the movable mirrors 20a, 20b. In this patent application, the control axis for the servo motor 38 driving the movable mirror 20a is designated as #9, and the control axis for the servo motor 40 driving the movable mirror 20b is designated as #10. In this connection, the laser scan head 18 may be provided with one or three or more movable mirrors.

The laser scan head 18 is connected with a laser oscillator 46 through an optical fiber 44 (Fig. 2). The laser oscillator 46 generates a laser beam under the control of the control unit 16, and supplies the laser beam to the laser processing tool 18 through the optical fiber 44. The control unit 16 may control the on/off operation for oscillation, the output power of the laser beam, and the like, for the laser oscillator 46.

As shown in Fig. 2, the control unit 16 includes, in addition to the rapid-traverse operation controlling section 24 described above, a processing operation controlling section 48 for controlling the operation of at least one of the manipulator 12, the movable mirror 20 and the movable support mechanism 22, so as to make the laser processing tool 14 perform a processing operation, during a processing period when the laser scan head 18 emits a laser beam L. The control unit 16 is configured from a robot controller for controlling the laser processing robot system 10 in its entirety, and is provided with a main CPU (central processing unit) 50 including the rapid-traverse operation controlling section 24 and the processing operation controlling section 48. The main CPU 50 is connected with a memory 52 comprised of a RAM and a ROM, and also is connected through a bus (not shown) with a servo-controller (not shown) for controlling the respective control axes #1 to #10 in the laser processing robot system 10, an input/output interface (not shown) for the laser oscillator 46, and an input/output interface (not shown) for a teaching operation panel 54. Further, the main CPU 50 may optionally be connected with an off-line teaching section 56 or an external memory thereof.

Thus, in the laser processing robot system 10 according to the illustrated embodiment, the processing operation controlling section 48 of the control unit 16 appropriately controls the operations of the manipulator 12, the laser processing tool 14 (the movable mirror 20 and the movable support mechanism 22) and the laser oscillator 46, so that it is possible to quickly and accurately locate the laser scan head 18 at desired positions and thus to perform laser processing while the laser beam L scans accurately along a desired processing path on the processed surface S. Further, in the laser processing robot system 10, the rapid-traverse operation controlling section 24 of the control unit 16 appropriately controls the operations of the manipulator 12 and the laser processing tool 14 (the movable mirror 20 and the movable support mechanism 22), so that it is possible to make the laser scan head 18 perform the rapid-traverse operation along a desired rapid-traverse path.

The teaching operation panel 54 is provided for teaching the operations of the manipulator 12 and the laser processing tool 14 (the movable mirror 20 and the movable support mechanism 22) and for setting a coordinate system, and includes a display screen such as an LCD and various input keys (not shown). Further, the teaching operation panel 54 has a jog-feed function for operating the respective control axes #1 to #10 for the manipulator 12 and the laser processing tool 14 by a manual operating mode. In the jog-feed function of the teaching operation panel 54, it is possible, while the manipulator 12 is halted, to operate the vertical shifting section 28 (the axis #7) of the movable support mechanism 22 of the laser processing tool 14 to adjust, by a manual mode, the distance between the laser scan head 18 and the processed surface S, or operate the horizontal shifting section 30 (the axis #8) of the movable support mechanism 22 to adjust the position of the laser scan head 18 in a horizontal direction above the processed surface S.

The off-line teaching section 56 is configured by a personal computer and the like, which may optionally be connected to the control unit 16. The off-line teaching section 56 can teach the control unit 16 the operation of at least one of the manipulator 12, the movable mirror 20 and the movable support mechanism 22 through an off-line simulation performed while referring to an indication displayed on a screen.

In the laser processing robot system 10 according to the illustrated embodiment, a laser processing program can be prepared (or taught) by either a remote teaching procedure using the teaching operation panel 54 or an off-line programming procedure using the off-line teaching section 56. According to the remote teaching procedure, the jog feed function of the teaching operation panel 54 is used to operate the manipulator 12 (the axes #1 to #6) and the laser processing tool 14 (the axes #7 to #10) in the manual mode so as to locate the laser scan head 18 and the movable mirror 20 correspondingly at target processing positions in sequence, whereby teaching a motion path (i.e., the processing path and the rapid-traverse path). Then, parameters indicating a head moving condition including a motion mode between taught points (i.e., a linear motion, an arcuate motion or a motion along each control axis), a moving speed, a positioning rate (i.e., a stop, a pass at an accelerated/decelerated speed or a pass at a constant speed) and the like, as well as a laser output condition including a power of the laser beam L and the like, and/or a on/off command for the operation of the laser oscillator 46, etc., are added to prepare the laser processing program.

According to the off-line programming procedure, in the off-line teaching section 56 configured by, e.g., a personal computer, a work-cell provided by modeling the actual laser processing robot system 10 in a three-dimensional manner is defined on an off-line programming system and taught points are specified in the work-cell, thereby teaching a motion path (i.e., the processing path and the rapid-traverse path) of the laser scan head 18 and the movable mirror 20. Further, in the off-line teaching section 56, the above-described parameters indicating the head moving condition and the laser output condition, and/or the above-described on/off command for the laser oscillator 46, etc., are added to prepare the laser processing program. In either procedure, the laser processing program, as prepared, is stored in the memory 52 of the control unit 16.

Next, examples of a laser processing program and a teaching procedure thereof, executed in the laser processing robot system 10, will be described with reference to Fig. 2.

The motion path (the processing path and the rapid-traverse path) of the laser scan head 18 and the movable mirror 20, which should be taught in the workpiece W, is taught in relation to a processing area previously set on the processed surface S with reference to the movable range of the movable mirror 20 in itself (i.e., a laser-beam irradiation range). In the illustrated example, processing paths are defined by P1 → P2 (the laser oscillator is turned on), P2 → P3 (the laser oscillator is turned off) and P3 → P4 (the laser oscillator is turned on) which depend on the operation of the movable mirror 20 within a processing area S1; P5 → P6 (the laser oscillator is turned on) depending on the synchronous operation of the movable mirror 20 and the manipulator 12 in a processing area S2; and P7 → P8 (the laser oscillator is turned on) depending on the operation of the movable mirror 20 in a processing area S3. On the other hand, rapid-traverse paths are defined by P4 → P5 (the laser beam irradiation is turned off) depending on the operation of the laser scan head 18 during the traverse from the processing area S1 to the processing area S2; and P6 → P7 (the laser beam irradiation is turned off) depending on the operation of the laser scan head 18 during the traverse from the processing area S2 to the processing area S3. Thus, laser-processing executing zones (P1 → P2, P3 → P4, P5 → P6, P7 → P8) and laser-processing non-executing zones (P2 → P3, P4 → P5, P6 → P7) exist between the start point P1 and the end point P8 in the motion path to be taught.

Therefore, as for the rapid-traverse paths (P4 → P5, P6 → P7) in the laser-processing non-executing zones (P2 → P3, P4 → P5, P6 → P7), the rapid-traverse operation of the laser scan head 18 is performed under the control of the rapid-traverse operation controlling section 24 as described above, so that it is possible to reduce the cycle time and to improve the processing efficiency.

The above-described motion path can be taught according to, e.g., the following procedure. In this connection, at the beginning of teaching, the manipulator 12 and the laser processing tool 14 are set at initial orientations as shown in Fig. 2.
i) The horizontal shifting section 30 (the axis #8) of the movable support mechanism 22 is operated in the manual mode, so as to locate the laser scan head 18 at an initial position (a leftmost position in the figure). (In this condition, the axis value of the axis #8 (i.e., a coordinate value or an encoder reading value) = X0.)
ii) The manipulator 12 (the axes #1 to #6) is operated in the manual mode and the laser oscillator 46 is activated, so as to bring the focus of the laser beam L emitted from the laser scan head 18 coincident with the taught point P1.
iii) In this state, the vertical shifting section 28 (the axis #7) of the movable support mechanism 22 is operated in the manual mode, so as to adjust the height of the laser scan head 18 with respect to the processed surface S, and the height adjustment value is stored in the memory 52.
iv) The positions of the manipulator 12 and the laser scan head 18 (i.e., the axis values of the axes #1 to #8), at an instant when the height adjustment is finished, are stored in the memory 52.
v) From this state, the movable mirror 20 (the axes #9 and #10) is operated in the manual mode, so as to bring the focus of the laser beam L emitted from the laser scan head 18 coincident with the taught points P2, P3, P4 in this order, and the positions of the movable mirror 20 (i.e., the axis values of the axes #9 and #10) at the respective taught points P2, P3, P4 are stored in the memory 52.
vi) After teaching the taught point P4, the horizontal shifting section 30 (the axis #8) of the movable support mechanism 22 is operated in the manual mode, so as to shift the laser scan head 18 from the processing area S1 to the processing area S2, and the laser oscillator 46 is activated so as to make the focus of the laser beam L emitted from the laser scan head 18 coincident with the taught point P5.
vii) In this state, the vertical shifting section 28 (the axis #7) of the movable support mechanism 22 is operated in the manual mode, so as to adjust the height of the laser scan head 18 with respect to the processed surface S, and the positions of the manipulator 12 and the laser scan head 18 (i.e., the axis values of the axes #1 to #8), at an instant when the height adjustment is finished, are stored in the memory 52.
viii) From this state, the movable mirror 20 (the axes #9 and #10) is operated in the manual mode, so as to bring the focus of the laser beam L emitted from the laser scan head 18 coincident with the taught point P6, and the positions of the movable mirror 20 (i.e., the axis values of the axes #9 and #10) at the respective taught points P5, P6 are stored in the memory 52.
ix) Next, the manipulator 12 (the axes #1 to #6) is operated in the manual mode, so as to move the flange surface 26 at the distal end thereof from an initial position E0 (shown by a solid line) to a next position E1 (shown by a broken line), and simultaneously therewith, the horizontal shifting section 30 (the axis #8) of the movable support mechanism 22 is operated in the manual mode, so as to locate the laser scan head 18 at the initial position (the axis value of the axis #8 = X0) As a result, in preparation for a processing operation in the next processing area S3, it is possible to ensure the motion stroke of the laser scan head 18 on the horizontal shifting section 30.
x) From this state, the horizontal shifting section 30 (the axis #8) of the movable support mechanism 22 is operated in the manual mode, so as to shift the laser scan head 18 from the processing area S2 to the processing area S3, and the laser oscillator 46 is activated, so as to bring the focus of the laser beam L emitted from the laser scan head 18 coincident with the taught point P7.
xi) In this state, the vertical shifting section 28 (the axis #7) of the movable support mechanism 22 is operated in the manual mode, so as to adjust the height of the laser scan head 18 with respect to the processed surface S, and the positions of the manipulator 12 and the laser scan head 18 (i.e., the axis values of the axes #1 to #8), at an instant when the height adjustment is finished, are stored in the memory 52.
xii) From this state, the movable mirror 20 (the axes #9 and #10) is operated in the manual mode, so as to bring the focus of the laser beam L emitted from the laser scan head 18 coincident with the taught point P8, and the positions of the movable mirror 20 (i.e., the axis values of the axes #9 and #10) at the respective taught points P7, P8 are stored in the memory 52. In this manner, the motion path from the start point P1 to the end point P8 is taught.

The above-described teaching procedure can be executed by using either the teaching operation panel 54 or the off-line teaching section 56. In particular, when the off-line teaching section 56 is used, it is possible to set the respective operation patterns of the manipulator 12, the movable mirror 20 and the movable support mechanism 22 in the motion path, in such a manner as to ensure the most efficient motion path, by simulation on a display screen of the personal computer and the like.

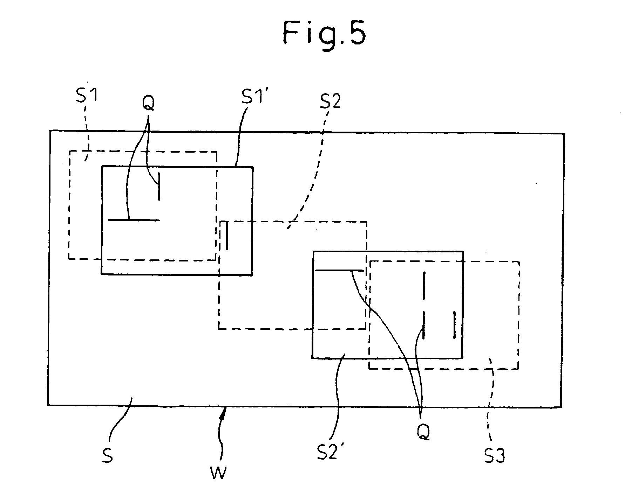

For example, as shown in Fig. 5, in the case where three processing areas S1, S2, S3 (broken lines) are set for a plurality of processing positions Q (bold lines), it is possible to appropriately shift or change the processing areas so as to be reset into two processing areas S1', S2' (solid lines) involving all processing positions Q. Such new processing areas can be set by the off-line teaching section 56 based on the data of the plurality of processing positions Q, on the condition that the operating amount of the manipulator 12 can be minimized. As a result, in addition to the adoption of the rapid-traverse operation control as described above, it is possible to prepare a series of laser processing programs for the workpiece W in such a manner that the operations of the manipulator 12, the movable mirror 20 and the movable support mechanism 22 are optimized for the purpose of reducing the cycle time.

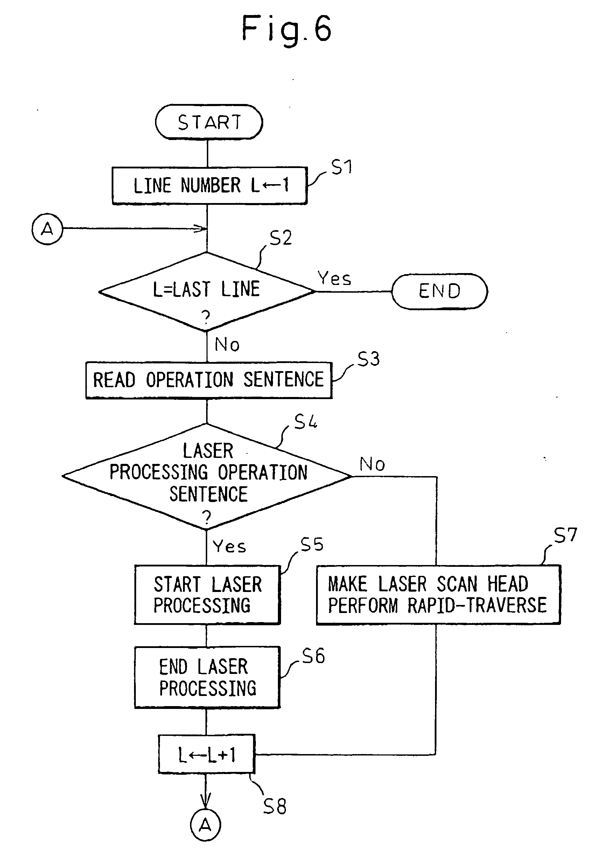

The laser processing program prepared in accordance with the above-described teaching procedure is stored in the memory 52 of the control unit 16. When the execution command of the program is input through, e.g., the teaching operation panel 54, the main CPU of the control unit 16 executes a process according to a flow chart of Fig. 6.

First, in step S1, an index representing the number L of each line describing the laser processing program is set to "1" as an initial number. Next, in step S2, it is judged whether the line number L at the current process represents the last line and, if it represents the last line, the process flow is terminated. If it does not represent the last line, the process proceeds to step S3.

In step S3, an operation sentence of the laser processing program, described in the line number L at the current process, is read. Next, in step S4, it is judged whether the operation sentence is to perform the laser processing or to perform the rapid-traverse operation and, in the former case, the process proceeds to step S5 while, in the latter case, the process proceeds to step S7. Then, in step S5, the manipulator 12, the movable mirror 20 and the laser oscillator 46 are operated to start the laser processing for an indicated processing position (e.g., P1 → P2 of Fig. 1) and, in step S6, the laser oscillator 46 is halted at the same time as the movable mirror 20 reaches a process end point (e.g., P2), so as to terminate the laser processing for the indicated processing position.

On the other hand, in step S7, the movable support mechanism 22 is operated to make the laser scan head 18 perform the rapid-traverse operation (e.g., P6 → P7 of Fig. 1). At this time, as taught in the teaching procedure (ix) described above, the manipulator 12 and the movable support mechanism 22 are operated synchronously, so as to ensure the motion stroke of the laser scan head 18 in the next processing area. In this connection, such a preliminary operation is executed by the rapid-traverse operation controlling section 24 of the control unit 16 and, to this end, the rapid-traverse operation controlling section 24 is configured to be able to control the operation of at least one of the manipulator 12 and the movable mirror 20, in addition to the operation control of the movable support mechanism 22, during the non-processing period.

Lastly, in step S8, the index representing the line number L describing the laser processing program is incremented by 1, and the process returns to step S2. Hereinafter, the processing cycle is repeated until the line number L is judged as the last line in step S2. In this manner, the laser processing program is executed, and the indicated laser processing operation is finished with the effectively reduced cycle time.

While the invention has been described with reference to specific preferred embodiments, it will be understood, by those skilled in the art, that various changes and modifications may be made thereto without departing from the scope of the following claims.

## Claims

1. A laser processing robot system (10) comprising a manipulator (12), a laser processing tool (14) attached to said manipulator (12) and a control unit (16) for controlling operations of said manipulator (12) and said laser processing tool (14);
said laser processing tool comprising
a laser scan head (18) with a movable mirror (20), incorporated therein; and
**characterized in that :** the manipulator (12) further comprises a movable support mechanism (22) connected onto the distal end of the manipulator and movably supporting said laser scan head , the movable support mechanism (22) comprises a horizontal shifting section (30) for shifting said laser head (18) in a horizontal direction relative to a surface to be processed
and said control unit further comprises:
a rapid-traverse operation controlling section (24) for controlling an operation of said movable support mechanism to make said laser scan head perform a rapid-traverse operation during a non-processing period when said laser scan head (18) does not emit a laser beam (L), wherein the laser scan head (18) is moved during the rapid-traverse operation by the horizontal shifting section (30).

2. A laser processing robot system (10) as set forth in claim 1, **characterized in that** said rapid-traverse operation controlling section (24) controls an operation of at least one of said manipulator (12) and said movable mirror (20), in addition to an operation control of said movable support mechanism (22), during said non-processing period.

3. A laser processing robot system (10) as set forth in claim 1, **characterized in that** said control unit (16) further comprises a processing operation controlling section (48) for controlling an operation of at least one of said manipulator (12), said movable mirror (20) and said movable support mechanism (22) to make said laser processing tool (14) perform a processing operation during a processing period when said laser scan head emits a laser beam.

4. A laser processing robot system (10) as set forth in claim 1, **characterized in that** said movable support mechanism (22) further includes a vertical shifting section (28) for shifting said laser scan head (18) in a vertical direction relative to a surface (S) to be processed.

5. A laser processing robot system (10) as set forth in any one of claims 1 to 4, **characterized in that** the system (10) further comprises an off-line teaching section (56) for teaching said control unit (16) an operation of at least one of said manipulator (12), said movable mirror (20) and said movable support mechanism (22) through an off-line simulation; and that said off-line teaching section (56) prepares a series of laser processing programs for a workpiece on a condition that an operating amount of said manipulator (12) is minimized.

6. A method of controlling a laser processing robot system (10), the method comprising the steps of:
providing a laser processing tool (14) comprising a laser scan head (18) with a movable mirror (20) incorporated therein and
attaching said laser processing tool (18) to a manipulator (12), wherein the manipulator (12) is adapted to move the laser scan head (18) in at least one horizontal direction,
**characterized in that** the manipulator (12) further comprises a movable support mechanism (22) movably supporting said laser scan head (18); the movable support mechanism (22) comprises a horizontal shifting section (30) for shifting said laser head (18) in a horizontal direction relative to a surface to be processed and the method further comprises
controlling an operation of said movable support mechanism (22) to make said laser scan head (18) perform a rapid-traverse operation during a non-processing period when said laser scan head (18) does not emit a laser beam (L), wherein the laser scan head (18) is moved during the rapid-traverse operation by the horizontal shifting section (30).

## Patentansprüche

1. Laserbearbeitungs-Robotersystem (10) mit einem Manipulator (12), einem an dem Manipulator (12) angebrachten Laserbearbeitungswerkzeug (14) und einer Steuereinheit (16) zum Steuern von Betriebshandlungen des Manipulators (12) und des Laserbearbeitungswerkzeugs (14);
wobei das Laserbearbeitungswerkzeug umfasst:
einen Laserabtastkopf (18) mit einem darin eingebauten beweglichen Spiegel (20), und
**dadurch gekennzeichnet, dass** der Manipulator (12) ferner einen beweglichen Lagermechanismus (22) aufweist, der mit dem distalen Ende des Manipulators verbunden ist und den Laserabtastkopf beweglich lagert, wobei der bewegliche Lagermechanismus (22) eine Horizontalverschiebungseinrichtung (30) zum Verschieben des Laserkopfes (18) in einer horizontalen Richtung relativ zu einer zu bearbeitenden Fläche umfasst, und wobei die Steuereinheit ferner umfasst:
eine Schnellbewegungsbetriebs-Steuereinrichtung (24) zum Steuern eines Betriebs des beweglichen Lagermechnismus, um den Laserabtastkopf (18) dazu zu veranlassen, einen Schnellbewegungsbetrieb während einer Nichtbearbeitungsperiode durchzuführen, wenn der Laserabtastkopf (18) keinen Laserstrahl (L) emittiert, wobei der Laserabtastkopf (18) während des Schnellbewegungsbetriebs durch die Horizontalverschiebungseinrichtung (30) bewegt wird.

2. Laserbearbeitungs-Robotersystem (10) nach Anspruch 1, **dadurch gekennzeichnet, dass** die Schnellbewegungsbetriebs-Steuereinrichtung (24) während der Nichtbearbeitungsperiode zusätzlich zu einer Betriebssteuerung des beweglichen Lagermechanismus (22) einen Betrieb des Manipulators (12) und/oder des beweglichen Spiegels (20) steuert.

3. Laserbearbeitungs-Robotersystem (10) nach Anspruch 1, **dadurch gekennzeichnet, dass** die Steuereinheit (16) ferner eine Bearbeitungsbetriebs-Steuereinrichtung (48) zum Steuern eines Betriebs des Manipulators (12) und/oder des beweglichen Spiegels (20) und/oder des beweglichen Lagermechanismus (22) umfasst, um das Laserbearbeitungswerkzeug (14) dazu zu veranlassen, während einer Bearbeitungsperiode, wenn der Laserabtastkopf einen Laserstrahl emittiert, einen Bearbeitungsbetrieb durchzuführen.

4. Laserbearbeitungs-Robotersystem (10) nach Anspruch 1, **dadurch gekennzeichnet, dass** der bewegliche Lagermechanismus (22) ferner eine Vertikalverschiebungseinrichtung (28) zum Verschieben des Laserabtastkopfes (18) in einer vertikalen Richtung umfasst.

5. Laserbearbeitungs-Robotersystem (10) nach einem der Ansprüche 1 bis 4, **dadurch gekennzeichnet, dass** das System (10) ferner eine Offline-Lehreinrichtung (56) umfasst, um durch eine Offline-Simulation der Steuereinheit (16) einen Betrieb des Manipulators (12) und/oder des beweglichen Spiegels (20) und /oder des beweglichen Lagermechanismus (22) beizubringen; und dass
die Offline-Lehreinrichtung (56) unter einer Bedingung, dass ein Betriebsmaß des Manipulators (12) minimiert ist, eine Reihe von Laserbearbeitungsprogrammen für ein Werkstück vorbereitet.

6. Verfahren zum Steuern eines Laserbearbeitungs-Robotersystems (10), wobei das Verfahren die Schritte umfasst:
Bereitstellen eines Laserbearbeitungswerkzeugs (14), das einen Laserabtastkopf (18) mit einem darin eingebauten beweglichen Spiegel (20) umfasst, und
Anbringen des Laserbearbeitungswerkzeugs an einem Manipulator (12), wobei der Manipulator (12) dazu eingerichtet ist, den Laserabtastkopf (18) in mindestens einer horizontalen Richtung zu bewegen,
**dadurch gekennzeichnet, dass** der Manipulator (12) ferner einen beweglichen Lagermechanismus (22) umfasst, der den Laserabtastkopf (18) beweglich lagert, wobei der bewegliche Lagermechanismus (22) einen Horizontalverschiebungsmechanismus (30) zum Verschieben des Laserabtastkopfes (18) in einer horizontalen Richtung relativ zu einer zu bearbeitenden Fläche umfasst,
und wobei das Verfahren ferner umfasst:
Steuern eines Betriebs des beweglichen Lagermechanismus (22), um den Laserabtastkopf (18) dazu zu veranlassen, während einer Nichtbearbeitungsperiode, wenn der Laserabtastkopf (18) keinen Laserstrahl (L) emittiert, einen Schnellbewegungsbetrieb durchzuführen, wobei der Laserabtastkopf (18) während des Schnellbewegungsbetriebs durch die Horizontalverschiebungseinrichtung (30) bewegt wird.

## Revendications

1. Système de robot de traitement au laser (10) comprenant un manipulateur (12), un outil de traitement au laser (14) fixé sur ledit manipulateur (12) et une unité de commande (16) pour commander les opérations dudit manipulateur (12) et dudit outil de traitement au laser (14) ;
ledit outil de traitement au laser comprenant :
une tête de balayage laser (18) avec un miroir mobile (20), incorporé dans celle-ci, et
**caractérisé en ce que** le manipulateur (12) comprend en outre un mécanisme de support mobile (22) raccordé sur l'extrémité distale du manipulateur et supportant de façon mobile ladite tête de balayage laser, le mécanisme de support mobile (22) comprend une section de déplacement horizontal (30) pour déplacer ladite tête laser (18) dans une direction horizontale par rapport à une surface devant être traitée;
et **en ce que** ladite unité de commande comprend en outre :
une section de commande d'opération transversale rapide (24) pour commander une opération dudit mécanisme de support mobile pour faire en sorte que ladite tête de balayage laser effectue une opération transversale rapide pendant une période de non traitement lorsque ladite tête de balayage laser (18) n'émet pas de faisceau laser (L), dans lequel la tête de balayage laser (18) est déplacée pendant l'opération transversale rapide par la section de déplacement horizontal (30).

2. Système de robot de traitement au laser (10) selon la revendication 1, **caractérisé en ce que** ladite section de commande d'opération transversale rapide (24) commande une opération d'au moins l'un dudit manipulateur (12) et dudit miroir mobile (20), outre une commande d'opération dudit mécanisme de support mobile (22), pendant ladite période de non traitement.

3. Système de robot de traitement au laser (10) selon la revendication 1, **caractérisé en ce que** ladite unité de commande (16) comprend en outre une section de commande d'opération de traitement (48) pour commander une opération d'au moins l'un dudit manipulateur (12), dudit miroir mobile (20) et dudit mécanisme de support mobile (22) pour faire en sorte que ledit outil de traitement laser (14) effectue une opération de traitement pendant une période de traitement lorsque ladite tête de balayage laser émet un faisceau laser.

4. Système de robot de traitement au laser (10) selon la revendication 1, **caractérisé en ce que** ledit mécanisme de support mobile (22) inclut en outre une section de déplacement vertical (28) pour déplacer ladite tête de balayage laser (18) dans une direction verticale par rapport à une surface (S) devant être traitée.

5. Système de robot de traitement au laser (10) selon l'une quelconque des revendications 1 à 4, **caractérisé en ce que** le système (10) comprend en outre une section d'apprentissage hors ligne (56) pour apprendre à ladite unité de commande (16) une opération d'au moins l'un dudit manipulateur (12), dudit miroir mobile (20) et dudit mécanisme de support mobile (22) par l'intermédiaire d'une simulation hors ligne ; et **en ce que** ladite section d'apprentissage hors ligne (56) prépare une série de programmes de traitement au laser pour une pièce à usiner à la condition qu'une quantité opérationnelle dudit manipulateur (12) soit minimisée.

6. Procédé pour commander un système de robot de traitement au laser (10), le procédé comprenant les étapes de :
prévoir un outil de traitement au laser (14) comprenant une tête de balayage laser (18) avec un miroir mobile (20) incorporé dans celle-ci et
fixer ledit outil de traitement au laser (14) sur un manipulateur (12), où le manipulateur (12) est adapté pour déplacer la tête de balayage laser (18) dans au moins une direction horizontale,
**caractérisé en ce que** le manipulateur (12) comprend en outre un mécanisme de support mobile (22) supportant de façon mobile ladite tête de balayage laser (18), le mécanisme de support mobile (22) comprend une section de déplacement horizontal (30) pour déplacer ladite tête laser (18) dans une direction horizontale par rapport à une surface devant être traitée, et le procédé comprend en outre
de commander une opération dudit mécanisme de support mobile (22) pour faire en sorte que ladite tête de balayage laser (18) effectue une opération transversale rapide pendant une période de non traitement lorsque ladite tête de balayage laser (18) n'émet pas de faisceau laser (L), dans lequel la tête de balayage laser (18) est déplacée pendant l'opération transversale rapide par la section de déplacement horizontal (30).
